# EUROPEAN PATENT APPLICATION

(11) **EP 2 051 472 A1**
(43) Date of publication of application: **22.04.2009**
(21) Application number: 07020488.8
(22) Date of filing: 19.10.2007
(51) Int. Cl.: H04L 29/06

(54) **System for managing service interactions**

(71) Applicant: Koninklijke KPN N.V., 2516 CK The Hague (NL); Nederlandse Organisatie voor Toegepast- Natuurwetenschappelijk Onderzoek TNO, 2628 VK Delft (NL)
(72) Inventor: Stokking, Hans Maarten, 2545 HK the Hague (NL); Walraven, Fabian Arthur, 9711 VM Groningen (NL); van Deventer, Mattijs Oskar, 2264 DL Leidschendam (NL); Omar, Aziz Niamut, 3131 HV Vlaardingen (NL)
(74) Representative: Wuyts, Koenraad Maria

(57) **Abstract**

A system is described for managing service interactions in a combined service. The system comprises a first service delivery means for providing a first service to at least a first end-terminal, a second service delivery means for providing a second service to at least a second end-terminal, a combined service delivery means for providing a combined service capable of associating the first end-terminal to one of the second end-terminal. The combined service is implemented using a combined state model, which comprises a predetermined number of combined states formed on the basis of the states of the first and second service and armed detection points for detecting predetermined transitions between the combined states. The combined service delivery means further comprises a combined state manager adapted to transmit a control signal to the first and/or second service delivery means for inducing a predetermined state transition in the respective first and/or second service in response to the activation of an armed detection point.

## Description

### Field of the invention

The invention relates to a system for managing service interactions in a combined service. Further, the invention relates to method for managing service interactions in a system for providing a combined service to an end-terminal and to a computer program product for performing the steps of the method.

### Background of the invention

IP Multi-Media Subsystem (IMS) defined by the 3GPP and 3GPP2 standards open the door to a whole new range of new multi-media technologies, such as Voice over IP (VoIP) and IPTV. The IMS service architecture enables to combine services of various platforms to combined services. These combined services make use of the functionalities of various platforms to which end-terminals are connected to and are also referred to as blended or composite services.

WO2007/070652 describes an example of a blended or combined service allowing the caller ID information of the calling party to be displayed on the TV system of a subscriber. This caller ID service is implemented in the standard IMS services architecture. Interaction between the telephone and television services is managed by means of a central service broker referred to in IMS as the "Service Capability and Interaction Manger" (SCIM). The SCIM is implemented in the session control layer between the application server layer and the transport and end point layer as defined in the IMS architecture.

The service broker will receive incoming requests of services and processes these requests on the basis of a predetermined scheme such as first come first serve, priority or another predetermined sequence. Such schemes are known from service interactions in Intelligent Networks (IN), IMS, Parlay, etc. The service broker functions as a central gateway and thus requires all information traffic from and to the services to be led via the service broker. Such centralized scheme has disadvantages.

A first problem relates to the scalability of a central system. Increasing the number of services and combined services greatly increases the complexity of the central service manager. Further, increasing the number of end-terminals will greatly increase the data traffic to be controlled. The central service manager will become a bottleneck in scaling the system to large-scale applications.

A second problem relates to the fact that addition of a new service to an existing service system managed by a central broker will require to configuration and adaptation of the central broker. Frequent adaptation of the central broker bears the risk of a major failure of the whole service delivery.

### Summary of the invention

It is an object of the invention to reduce or eliminate at least one of the drawbacks of the prior art and to provide a system for managing service interactions in a combined service.

The system according to the invention comprises a first service delivery means for providing a first service to a least a first end-terminal, a second service delivery means for providing a second service to at least a second end-terminal and a combined service delivery means for providing a combined service capable of associating the first end-terminal to the second end-terminal. The combined service is implemented using a combined state model, which comprises a predetermined number of combined states formed on the basis of the states of the first and second service and armed detection points for detecting predetermined transitions between the combined states. The combined service delivery means comprises a combined state manager adapted to transmit a control signal to the first and/or second service delivery means for inducing a predetermined state transition in the respective first and/or second service in response to the activation of an armed detection point.

By implementing the combined service using a combined service model based on the state models of the underlying services, the system is able to manage service interactions without the necessity of a central service manager and without putting any constrains on the underlying network architecture.

In one embodiment of the invention the combined state manager is adapted to receive state information from the first and second service and to determine the combined state of the combined service.

In another embodiment the combined service delivery means further comprises a combined service logic which upon activation of an armed detection point retrieves from a decision database service interaction information associated with the armed detection point and transmits on the basis of the service interaction information a control signal to the first and/or second service delivery means. The activation of an armed trigger point allows the combined service to respond to state transition in the combined state model.

In one embodiment the first service delivery means is adapted to execute a first service logic and the second service delivery means is adapted to execute a second service logic. The first and second service logic are implemented using a first and second state model respectively, each comprising the states of the service, state transitions and detection points for detecting state transitions.

In another embodiment the combined states form combinations of the states of the first and second service. Using combinations of the first and second states, the combined state model effectively couples the first service to the second service. Evaluation of these coupled states, i.e. the combined states, allows efficient management of the interactions between the services.

In a further embodiment at least one state of the first or second service is extended to a predetermined number of extended states. The extended states comprise at least a first extended state indicative that a transition to the state is caused by the combined service and a second extended state indicative that a transition to the state is caused by the first or second service. Extending a state of the first or second service to a number of extended states allow the combined service to administer the cause of a state transition in the combined service. This way the combined service is able to make a distinction between state transitions which are triggered by the combined service self and state transitions which are triggered by one of the services.

In yet a further embodiment the combined service delivery means further comprises a first and second state manager for receiving state information from the first and second service respectively and transmitting the state information to the combined service manager.

In one embodiment the combined service manager further comprises one or more event listeners adapted to subscribe to notifications from the first and/or second service to send state information of the respective first service and/or second service to the combined service. The use of event listeners allows efficient notification of the state of a service.

In another embodiment the state information comprises the state of a service and state transition information identifying the cause of the transition to the state. The state transition information allows the combined service to make a distinction between state transitions, which are triggered by the combined service, and state transitions which are triggered by the first and/or second service.

In one embodiment of the invention the first service delivery means is a telephone service executed on a telephone platform, comprising at least a state <available> indicative that the telephone is available and a state <in_call> indicative that the telephone is in call. The second service delivery means is a television service executed on television platform, comprising at least a state <playing>, indicative that the television is playing, and a state, <pausing> indicative that the TV is on pause.

In a further embodiment of the invention the combined service states comprise combinations between the states <available> and <in_call> of the telephone service and the states <playing>, <pausing_{cs}> <pausingₒₛ> of the television service. The state <pausing_{cs}> represents the first extended state of the <pausing> state indicative that the combined service (CS) caused a transition to that state. The state <pausingₒₛ> represents the second extended states of the state <pausing> indicating that another service (OS) than the combined service caused a transition to that state. The combined states thus define a combined state model of combined telephone-television service, allowing efficient management of interactions between the telephone and the television service.

In one embodiment according to the invention the combined service is configured to allow a client to access the combined service via an interface, preferably a website interface, in order to select a predetermined configuration of the combined service, wherein the combined service uses the selected configuration to arm one or more detection points in the combined model.

In another embodiment according to the invention at least one of the first or second service delivery means is an telecommunications platform, preferably a telecommunications platform supporting IP-based telecommunications services, a digital television platform, a platform for executing business process management services or a platform for a home network system.

In one embodiment the first state model is the Basic Call State Model (BCSM).

In another embodiment combined service delivery means is implemented as an application server connected via a network to the first and second service delivery means.

In yet another embodiment the combined service delivery means is implemented in a set-top box. In a further embodiment the first and second service delivery means are implemented with the combined service delivery means in the set-top box.

The invention also relates to a method for managing service interactions in a system for providing a combined service as described in the embodiments above. In one embodiment the method comprises the steps of: (i) the combined service detecting a transition to a new combined state, and (ii) the combined service transmitting in response to the activation of an armed detection point a control signal to the first and/or second service delivery means for inducing a predetermined state transition in the respective first and/or second service.

Further, the invention relates to a computer program product, directly loadable into an internal memory of a digital computer comprising software code portions for performing the steps in the method as described above, when the product is run on a computer.

The invention also relates to an end-terminal comprising a combined service delivery means according as described above.

The invention will be further illustrated with reference to the attached drawings, which schematically show embodiments according to the invention. It will be understood that the invention is not in any way restricted to these specific embodiments.

### Brief description of the drawings

Fig. 1 depicts an exemplary first example of a system according to the invention.
Fig. 2 depicts an exemplary second example of a system according to the invention.
Fig. 3 shows the a simplified diagram of a state model of a telephone service and a TV service.
Fig. 4 illustrates the process flow of an exemplary embodiment of a combined service.
Fig. 5 illustrates the process flow of a first service interaction in an exemplary embodiment of a combined service.
Fig. 6 illustrates the flow of a second service interaction in an exemplary embodiment of a combined service.
Fig. 7 illustrates the process flow of a third service interaction in an exemplary embodiment of a combined service.
Fig. 8 depicts an exemplary example of a combined state model of an exemplary embodiment of a combined service.

### Detailed description

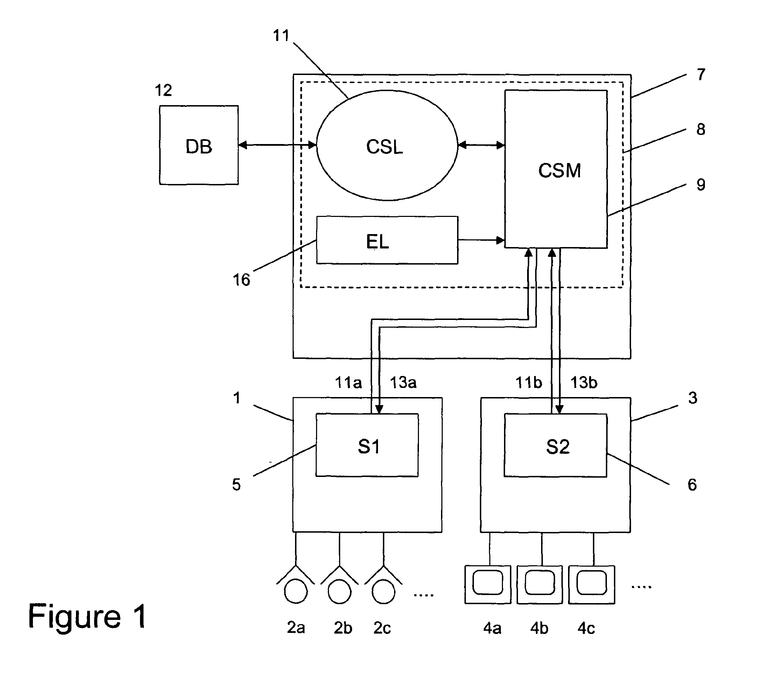

Fig. 1 depicts a schematic drawing of the system according to the invention. The system comprises a first service delivery means 1 connected to one or more first end-terminals 2a,2b,2c,... and a second service delivery means 3 connected to one or more second end-terminals 4a,4b,4c,.... The first and second service delivery means are adapted to deliver a first service (S1) 5 and second service (S2) 6 to the respective first and second end-terminals.

The service delivery means may be a telecommunications platform providing one or more telephone services to an end-terminal connected thereto. Such telecommunications platform is capable of delivering telephone services such as ID caller, SMS messaging, Follow on Call, etc. Preferably the telecommunications supports IP-based telecommunications functionality such as VoIP.

The service delivery means may also be a service provider providing Internet services, or a television platform providing televisions services, such as digital broadcast services including IPTV, HDTV, DVB, Video on Demand (VoD) or a platform for running business process management (BPM) services, etc.

The end-terminals may be set-top boxes connecting a telephone, a television, a PC, a PDA, etc. to a suitable service delivery means.

The services running on the service delivery means are implemented using a state model. For a basic telephone service this may be the Basic Call State Model (BCSM). The state model is a state machine description of a service in terms of states, state transition and detection points for detecting the state transitions. If an existing service is not implemented on the basis of a state model, it is possible to provide an interface, usually a software interface, which models the behavior of the service in terms of states and state transitions.

The first and second service delivery means are connected to a combined service delivery means 7, which hosts the one or more combined services 8. The combined delivery means 7 may be hosted on an application server located somewhere in a network or, alternatively, the combined delivery means 7 may also be implemented as a hardware/software unit in an end-terminal, such as a set-top box, located at the home of the user.

The combined service delivery means comprises a combined state manager (CSM) 9 connected to the first and second service delivery means 1,3 and a combined service logic (CSL) 10. The combined state manager 9 retrieves state information 10a,10b on the first and/or second service and determines on the basis of the state information the combined state of the combined service 8. The state information may comprise the states of a service and the cause of a state transition in that service. If a state transition in the combined service activates an armed detection point of the combined state model, the combined state manager triggers the combined service logic 10. On the basis of the state information and additionally information stored in a decision database 12 the combined service is able transmit one ore more control signals 13a, 13b to the first and/or second service, wherein a control signal will induce a predetermined state transition in a service to which it was transmitted. This process will be described in more detail hereunder.

If the first service delivery means is a telecommunications platform for providing telecommunications services, then the telecom service may communicate with the combined service delivery means using the Session Initiation Protocol (SIP), the Intelligent Network Application Part (INAP), the Mobile Application Part (MAP), the Customized Application for Mobile network Enhanced Logic (CAMEL), OSA/Parlay or other known protocols. Similarly, if the second service delivery means is a television platform, then the television service may communicate with the combined service delivery means using web services technology such as XML, SOAP, etc.

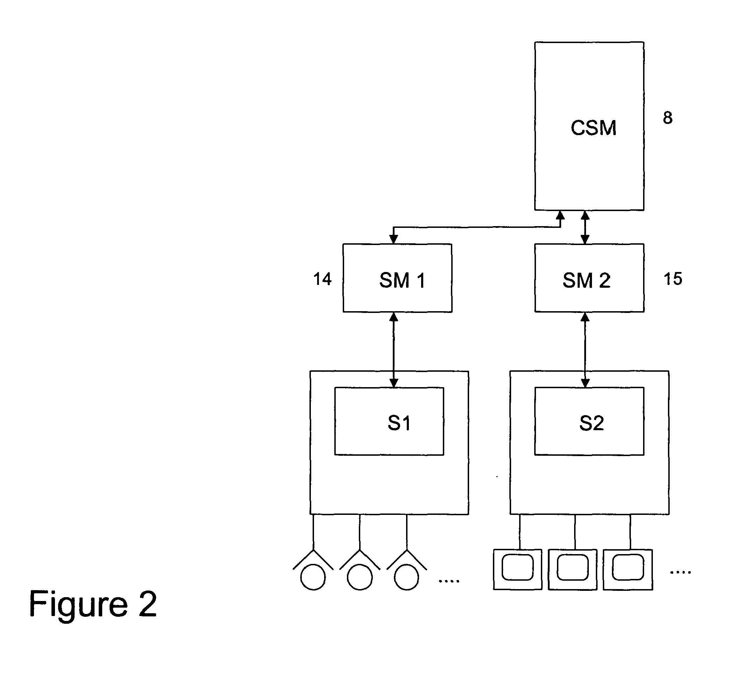

The combined service manager may retrieve and manage the state information itself, or alternatively, the combined service manager is connected to a first state manager 14 and second state manager 15. This is schematically illustrated in Fig. 2. Each state manager 14,15 retrieves and manages the state information of one particular service and sends this to the combined service manager 8.

The combined service manager or the state managers may use one or more event listeners 16 for retrieving state information. An event listener subscribes to state-transitions ("events") detected by a particular detection point in the state model of the first and/or second service so that every time a certain state transition occurs it notifies the combined state manager 8 or a state manager 14,15 of the occurrence of such event. This way the event listener makes a detection point an "armed" or "active" detection point. The combined state manager 8 is able to retrieve the new state information and to determine on the basis of this information the new state of the combined state model.

The combined service delivery means 7 may implemented as an application server, which is connected via one or more networks to the first and second service delivery means. The state managers 14,15 may be located in the application server, in the service delivery means hosting the first and second services or a separate unit hosing the state managers, which is connected to the first and second service delivery means and the combined service delivery means. Further, the combined delivery means 7 may also be implemented as a set-top box located at home or as a distributed system.

Hereafter the invention will be illustrated in more detail by a combined service "FoneFreez", which is an exemplary embodiment of the invention. The FoneFreez service is a combined service combining a basic telephone service with a basis television service. In that case, the first service delivery means is a basic telephone platform, preferably proving an IP-based telephony service, and the second service delivery means is a basic television platform, preferably providing a digital television service.

Upon reception of an incoming call from the first end-terminal, typically a telephone, FoneFreez will be activated and send a pause command to the second end-terminal, typically a set-top box, so that the TV connected to the set-top box is set to the pause state. This allows the viewer of the TV to start the telephone conversation without being disturbed by the TV. Then, after termination of the telephone conversation, FoneFreez will send a play command the TV.

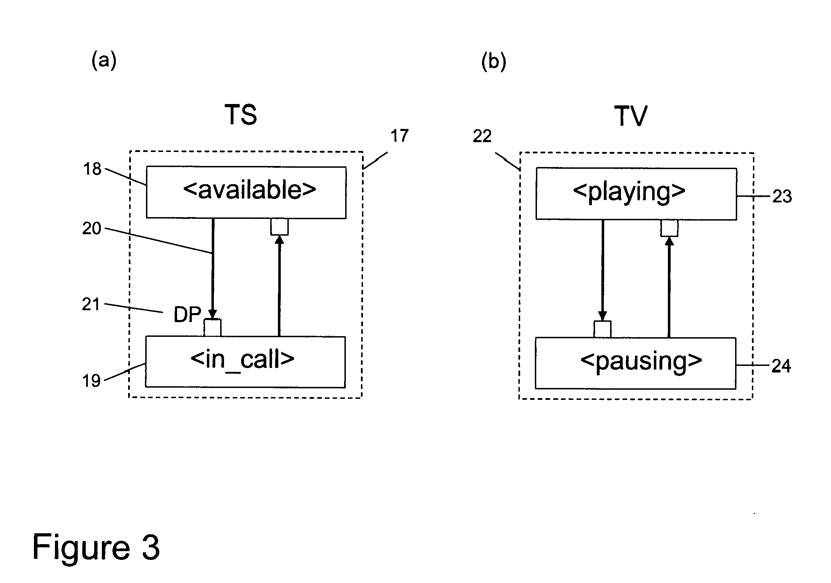

The process flow of the telephone- and TV service can be described by a state model. As shown in Fig. 3(a), the telephone service (TS) may be described by a state model 17, comprising - in its simplest form - the states <available> 18, indicating that no call is in progress and <in_call> 19, indicating that a call is in progress. Such a simple state model can be extended to more complex state models such as the Basic Call State Model (BCSM) as used in Intelligent Networks, which describes the Call Control Function (CCF) activities required to establish and maintain communication paths for subscribers to intelligent network (IN) services. For circuit switched operation, there is an Originating and Terminating BCSM. Such models may comprise a large number states.

When the user of the first end-terminal starts a telephone conversation, the state of the telephone service will change from <available> to <in_call>. This transition 20 can be detected by a detection point (DP) 21 in the state model. Upon termination of the call, a transition back to <available> is detected by second detection point.

Similarly, a basic TV service (TV) can be described by a state model 22, comprising the TV state <playing> 23, indicating that a TV program is in progress, and <pausing> 24, indicating that the TV program on pause. Transitions between these states are detected by detection points in the TV state model as indicated schematically in Fig 3(b).

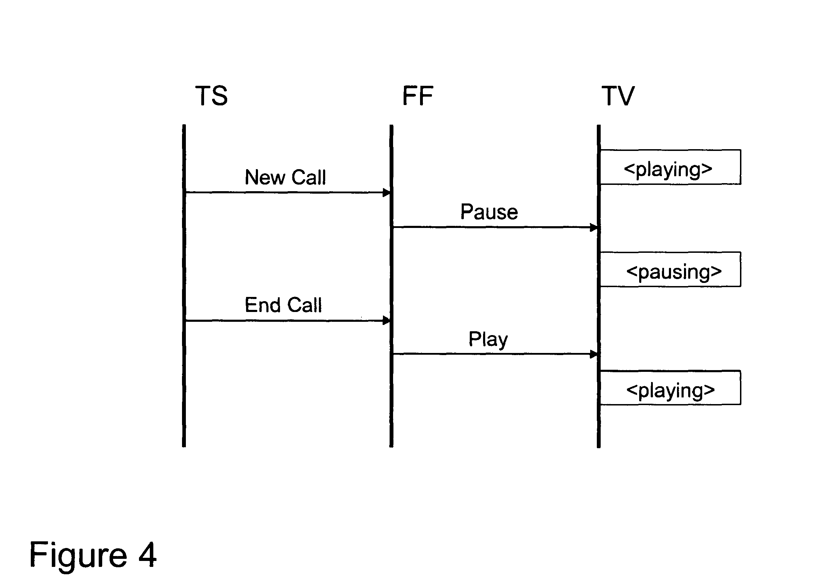

The basic functionality of FoneFreez is shown in Fig. 4. Upon an first incoming telephone call (New Call) FoneFreez (FF) will send a control signal, in this case a pause command, to the set-top box of the TV, thereby changing the TV state from <playing> to <pausing>. Similarly, after termination of the call (End Call), FoneFreez will cause the TV state to <playing>. Thus, depending on a predetermined state transition in the telephone service, the FoneFreez can take action by inducing a transition in the TV state. The combined service is thus capable of associating a telephone end-terminal connected to a telephone platform hosting a telephone service to a the television end-terminal connected to a television platform hosting a television service.

It is also possible that state transitions of the TV are caused by other sources or services then FoneFreez, such as a Remote Control (RM) or another service, such as Call Waiting (CW).

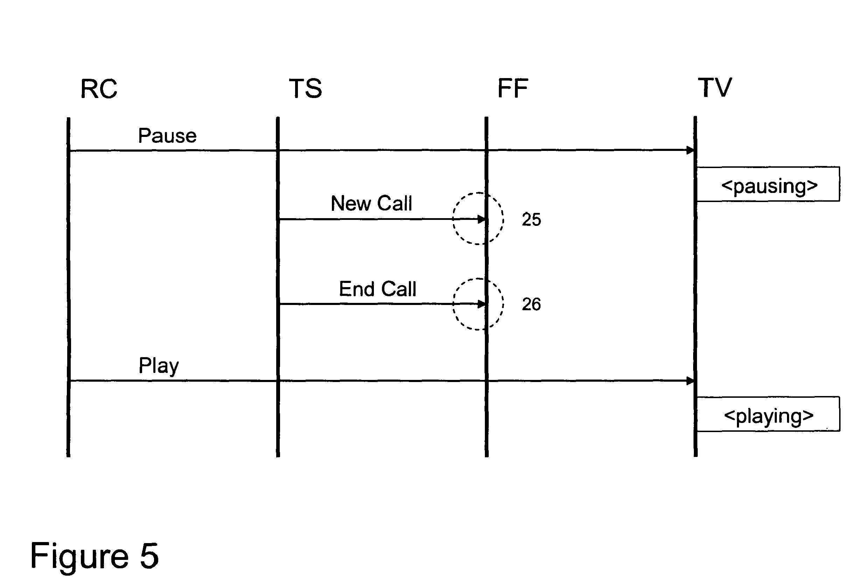

Fig. 5 illustrates the flow of a first interaction of FoneFreez with a Remote Control (RC) of the TV. The viewer may use the Remote Control to set the TV on pause. Then, upon reception of an incoming call (for instance by an answering machine) FoneFreez will normally send a pause command to the TV. This is however not necessary because the TV is already on pause. Further, after termination of the call, FoneFreez will send a play command to the TV, causing a transition to <playing>. Such situation however is not desired as the viewer wants to have the TV on pause.

In order to avoid such unwanted service interaction, FoneFreez can be made aware that, if the TV is set in the pausing state by the Remote Control and a new call arrives, it should not send a pause command to the TV (see Fig. 5, 25). Similarly, at the end of the call, it should not send a play command to the TV (see Fig. 5, 26).

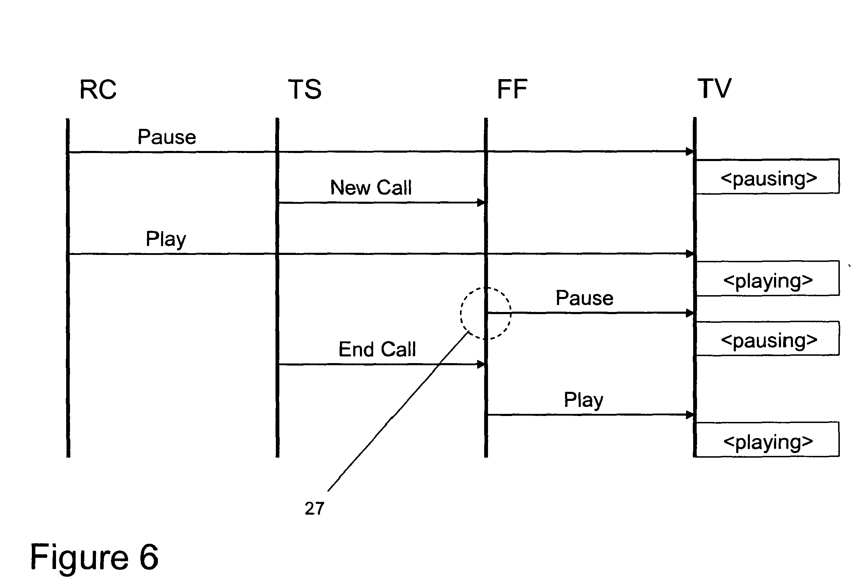

Fig. 6 illustrates the flow of a second interaction of FoneFreez with a Remote Control. In this situation the TV is set to <pausing> by the Remote Control, while another incoming call is received by FoneFreez. If somebody sends a play command to the TV using the remote control, the TV will start playing while the incoming telephone call is not yet finished. In order to avoid such a situation, FoneFreez may intervene by setting the state of the TV back to <pausing> (Fig. 6, 27).

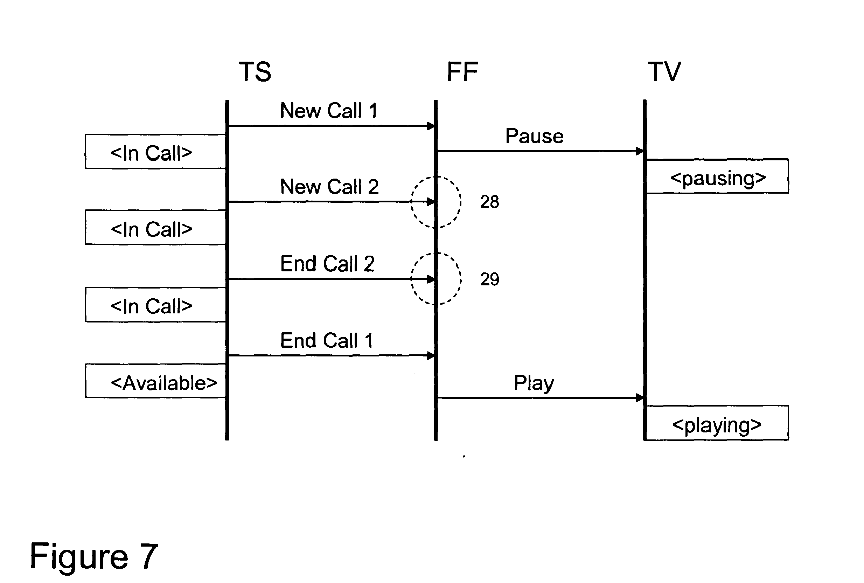

Fig. 7 illustrates the flow of a third service interaction. In this case the telephone platform also provides a Call Waiting service (CW). This service allows a second incoming call to put on hold when the first call is still in progress. The user receiving the calls is able to switch between the first and second call. Without intervention of FoneFreez Select Call can introduce similar problems as discussed above in connection with the Remote Control.

The FoneFreez service would, for instance, send - upon the arrival of the second incoming call (New Call 2) - a pause command to the TV (which was due to a first call already in <pausing>) and send a play command to the TV after the termination of the second call (End Call 2). This will cause the TV to start playing while the first call is still in progress. FoneFreez may intervene in a similar way as described above, i.e. by not sending a pause command after the second incoming call (Fig. 7, 28) and by not sending a play command after termination of the second call (Fig. 7, 29).

Thus, in order to allow FoneFreez to manage service interactions, FoneFreez (i) should have state information regarding the TV and the telephone and (ii) should have information regarding the cause of changes in these states, (iii) should know when and how to take action.

In order to allow FoneFreez to process the state information and to take appropriate action in response to changes in the states of the state models of the telephone and TV state models in a simple and efficient way, the combined state model of FoneFreez should be determined.

The combined state-model comprises number of predetermined combined states {S^{C}} defined by the combinations of the first states {S¹}, e.g. the telephone states, and second states {S²}, e.g. the TV states. In order for the combined states to contain information regarding the cause of a state transition in the first and/or second states, at least one of these states is extended to a number of extended states. These extended states comprise at least a first extended state indicative that a transition to that state is caused by the combined service, e.g. FoneFreez, and a second extended state indicative that a transition to that state is caused by another source, e.g. the Remote Control or another service such as Call Select. Alternatively, the cause of a state transition may be processed by the combined state model in the form of state transition information, e.g. in the form of a state transition ID, which is send by the services to the combined services and comprises the cause of the state transition in a service.

The combined state model further comprises detection points {D^{C}} for detecting a transition between two states of the combined state model. Some of these detection points are armed (active) detection points. The detection points are armed in order to detect the occurrence of a transition to which FoneFreez should respond to. If such detection point is triggered, FoneFreez will respond with a certain action, e.g. to prevent a transition to such unwanted combination state. In this way the combined service is able to manage (unwanted) service interactions.

Thus the combined states of FoneFreez are formed by the combinations of the states of the telephone service: <available> and <in_call>, and the TV service: <playing> and <pausing>. In order to introduce information regarding the cause of a transition to the state <pausing>, this state is extended to a first extended state <pausing_{FF}>, indicating that the pausing state was caused by FoneFreez, and a second extended state <pausing_{OS}>, indicating that the pause state was not caused by FoneFreez, but another source (OS). This leads to the following six combined states of the combined state model of FoneFreez:

<available,playing>, <in_call,playing>, <available,pausing_{FF}>, <vailable, pausing_{OS}>, <in_call, pausing_{FF}>, <in_call, pausing_{OS}>.

The combined states <available,pausing_{FF}> and <in_call,pausing_{FF}> refer to the states wherein FoneFreez set the TV on pause. The combined states <vailable,pausingₒₛ> and <in_call,pausingₒₛ> refer to the states wherein the TV was set on pause by another source, e.g. a Remote Control or Call Waiting.

In order to allow FoneFreez to react to state transitions in the combined state model active (or armed) detection points should be present. For instance, an active detection point should be present between the transition from <available,playing> to <in_call,playing> in order instruct FoneFreez that the TV should be put on pause, corresponding to the combined state <in_call,pausing_{PF}>.

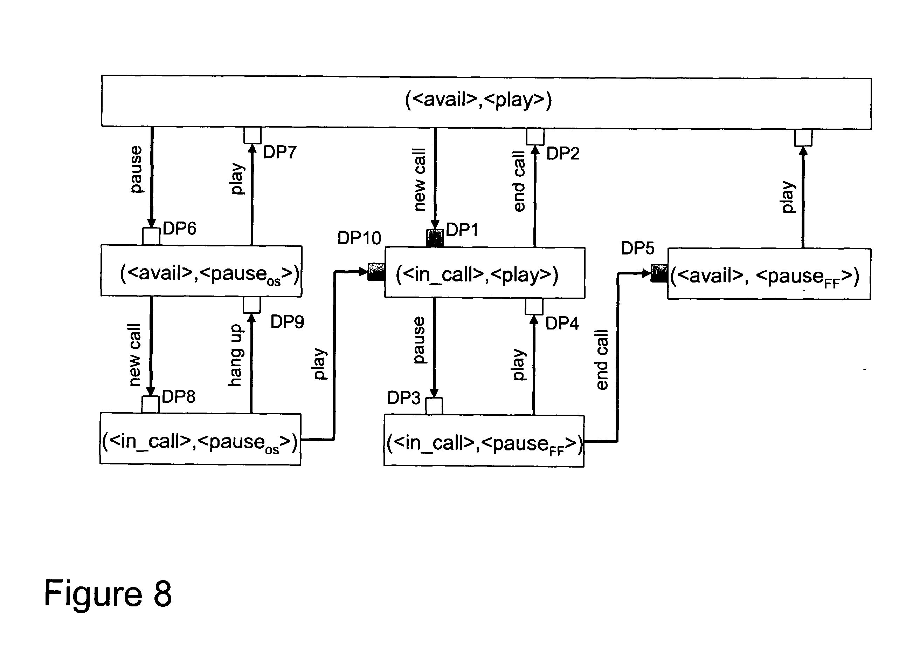

Fig. 8 schematically shows a combined state model of FoneFreez describing the transitions to the various combined states of the service. The detection points will be briefly discussed:
- DP1 detects an incoming call. DP1 is active in order to instruct FoneFreez to send a pause command to the TV.
- DP2 detects the end of a telephone call while the TV was playing. No action is required from FoneFreez so DP2 is not active.
- DP3 detects that the TV is paused by FoneFreez via active DP1. DP3 is not active.
- DP4 detects that the TV is put on play while the a call is active. DP4 is not active.
- DP5 detects that the call is terminated. DP5 should be active in order to instruct FoneFreez to send a play command to the TV.
- DP6 detects that the TV is paused while no call is active. DP6 is not active.
- DP7 detects that the TV is set on play while no call is active. DP7 is not active.
- DP8 detects an incoming call while the TV is on pause. DP8 is not active.
- DP9 detects the termination of the call while the TV is on pause. DP9 is not active.
- DP10 detects the TV is set from pause to play by another source than FoneFreez while a call is active. When desired DP10 can be made active in order to instruct FoneFreez to send a pause command to the TV.

It is not always required that the TV is on pause when a telephone call is active. The choice in which situation FoneFreez should take actions depends on how the service is configured. Part of the configuration is done at the design stage of the FoneFreez service. Another part could be configured according to the preference of the user.

For instance, a user could access FoneFreez via an interface, preferably a website interface, in order to select a predetermined configuration. Using the selected configuration FoneFreez is able to activate or deactivate the corresponding detection points in the state combined model of FoneFreez.

The functionality of the combined model may be extended. For instance, the <pausing> state could be extended further, for instance to the states <pausing_{FF}>,<pausing_{RC}> and <pausing_{CW}> provide FoneFreez whether the FoneFreez itself, the Remote Control or a Call Waiting service changed the TV to <pausing>.

In more general, the concept implementing a combined service by using a combined state model in a system and method according to the invention can be generally extended to systems offering a number of combined services combining services executed from many different service platforms.

FoneFreez should know which action should be taken upon activation of an armed detection point. This decision information can be stored in a decision database connected to the application server.

FoneFreez will have to update and evaluate the state information regarding the telephone service and TV service. It therefore has to perform the steps of:
- reception of state information from telephone and TV services (wherein the state information includes the current state of the services and - if a transition in the state of one of the services has occurred - state transition information regarding the cause of a transition in the first and/or second service);
- determination on the basis of that information whether a transition to a new combined state has occurred;
- check whether an armed detection point is triggered and if so - determine using the decision information stored in the database which action should be executed by FoneFreez.

Such methods steps can be perform by the combined state manager, preferably in cooperation with state managers and event listeners as described above. The FoneFreez event listeners will "subscribe" to certain state transitions in the telephone and television service. Thereafter, the telephone and television service will "notify" FoneFreez of the occurrence of the state transitions to which FoneFreez had subscribed to by sending the requested state information to FoneFreez.

The invention is not limited to the embodiments described above, which may be varied within the scope of the accompanying claims. For instance, the claimed invention may be used for managing other combined services such as displaying caller ID information on the television screen as described in the prior-art. A further example of a combined service may be a "television click-to-dial" service, which upon activation ("clicking") of a telephone number on the TV screen (e.g. a number in an advertisement) automatically forwards the user to that number. Further, the claimed invention may be used to manage combined services comprising more than two service providing means.

## Claims

1. System for managing service interactions in a combined service, comprising:
- a first service delivery means for providing a first service to at least a first end-terminal,
- a second service delivery means for providing a second service to at least a second end-terminal,
- a combined service delivery means for providing a combined service capable of associating the first end-terminal to one of the second end-terminal, the combined service being implemented using a combined state model, which comprises a predetermined number of combined states formed on the basis of the states of the first and second service and armed detection points for detecting predetermined transitions between the combined states, the combined service delivery means comprising a combined state manager adapted to transmit a control signal to the first and/or second service delivery means for inducing a predetermined state transition in the respective first and/or second service in response to the activation of an armed detection point.

2. System according to claim 1, wherein the combined state manager is further adapted to receive state information from the first and second service and to determine the combined state of the combined service.

3. System according to claim 1 or 2, wherein combined service delivery means further comprises a combined service logic which upon activation of an armed detection point retrieves from a decision database service interaction information associated with the armed detection point and transmits on the basis of the service interaction information a control signal to the first and/or second service delivery means.

4. System according to any of claims 1-3, wherein the first service delivery means is adapted to execute a first service logic and the second service delivery means is adapted to execute a second service logic, the first and second service logic being implemented using a first and second state model respectively, each comprising the states of the service, state transitions and detection points for detecting state transitions.

5. System according to any of claim 1-4, wherein the combined states form combinations of the states of the first and second service.

6. System according to claims 5, wherein at least one state of the first or second service is extended to a predetermined number of extended states, comprising at least an first extended state indicative that a transition to the state is caused by the combined service and a second extended state that is indicative that a transition to the state is caused by the first or second service.

7. System according to any of claims 1-6, wherein the combined service delivery means further comprises a first and second state manager for receiving state information from the first and second service respectively and transmitting the state information to the combined service manager.

8. System according to any of claims 1-5, wherein the combined service manager further comprises an event listener adapted to subscribe to notifications from the first and/or second service to send state information of the respective first service and/or second service.

9. System according to any of claims 1-8, wherein the state information comprises the state of a service and state transition information identifying the cause of the transition to the state.

10. System according to any of claims 1-6, wherein the first service delivery means is a telephone service executed on a telephone platform comprising at least a state <available> indicative that the telephone is available and a state <in_call> indicative that the telephone is in call and wherein the second service delivery means is a television service executed on television platform comprising at least a state <playing> indicative that the television is playing and a state <pausing> indicative that the TV is on pause.

11. System according to claim 10, wherein the combined service states comprise combinations between the states <available> and <in_call> of the telephone service and the states <playing>, <pausing_{CS}> <pausing_{OS}> of the television service, wherein <pausing_{CS}> represents the first extended state of the <pausing> state indicative that the combined service (CS) caused a transition to that state and the <pausing_{OS}> represents the second extended states of the state <pausing> indicating that an other service (OS) than the combined service caused a transition to that state.

12. System according to any of claims 1-11, wherein the combined service is configured to allow a client to access the combined service via an interface, preferably a website interface, in order to select a predetermined configuration of the combined service, wherein the combined service uses the selected configuration to arm one or more detection points in the combined model.

13. System according to any of claim 1-9, wherein the at least one of the first or second service delivery means is an telecommunications platform, preferably a platform supporting IP-based telecommunications services, a digital television platform, a platform for executing business process management services or a platform for home network system.

14. System according to any of claims 1-11, wherein the combined service delivery means is implemented as an application server connected via a network to the first and second service delivery means.

15. System according to any of claims 1-11, wherein the combined service delivery means is implemented in an end-terminal, preferably a set-top box.

16. System according to claim 15, wherein the first and second service delivery means are implemented with the combined service delivery means in the end-terminal.

17. Method for managing service interactions in a system for providing a combined service comprising:
- a first service delivery means for providing a first service to at least a first end-terminal,
- a second service delivery means for providing a second service to at least a second end-terminal,
- a combined service delivery means for providing a combined service capable of associating the first end-terminal to the second end-terminal, the combined service being implemented using a combined state model, which comprises a predetermined number of combined states formed on the basis of the states of the first and second service and armed detection points for detecting predetermined transitions between the combined states,
the method comprising the steps of:
- the combined service detecting a transition to a new combined state, and
- transmitting in response to the activation of an armed detection point a control signal to the first and/or second service delivery means for inducing a predetermined state transition in the respective first and/or second service.

18. Computer program product, directly loadable into an internal memory of a digital computer comprising software code portions for performing the steps of claim 17, when the product is run on a computer.

19. End-terminal comprising a combined service delivery means as defined in claim 1.
